**Europäisches Patentamt**

**European Patent Office**

**Office européen des brevets**

(19)

(11) Numéro de publication: **0 180 511**
**B1**

# (12) FASCICULE DE BREVET EUROPEEN

(45) Date de publication du fascicule du brevet:
**07.12.88**

(51) Int. Cl.⁴: **G 01 N 35/00,** G 01 N 1/28

(21) Numéro de dépôt: **85402030.2**

(22) Date de dépôt: **21.10.85**

(54) Procédé et appareil de préparation d'échantillons à des fins d'analyse.

(30) Priorité: **24.10.84 FR 8416283**

(43) Date de publication de la demande:
**07.05.86 Bulletin 86/19**

(45) Mention de la délivrance du brevet:
**07.12.88 Bulletin 88/49**

(84) Etats contractants désignés:
**DE FR GB IT SE**

(56) Documents cités:
**US-A- 3 536 452**
**US-A- 4 219 530**
**US-A- 4 221 568**

(73) Titulaire: **Marteau d'Autry, Eric, 1, Rue Boutarel,
F-75004 Paris (FR)**

(72) Inventeur: **Marteau d'Autry, Eric, 1, Rue Boutarel,
F-75004 Paris (FR)**

(74) Mandataire: **Ahner, Francis et al, CABINET
REGIMBEAU 26, avenue Kléber, F-75116 Paris (FR)**

## Description

La présente invention concerne un procédé et un appareil de préparation d'échantillons à des fins d'analyse.

Elle concerne un procédé de préparation d'échantillons dans lequel on injecte successivement au moyen d'une aiguille, dans une cartouche pourvue d'un orifice en partie inférieure, au moins un réactif et un échantillon de départ, de manière qu'ils traversent une colonne d'un agent pulvérulent contenu dans la cartouche; le dernier produit de traversée de la colonne, qui est recueilli séparément, constitue l'échantillon final qui sera analysé.

Les réactifs peuvent être injectés aussi bien avant injection de l'échantillon qu'après. Dans le premier cas, les réactifs réalisent une imprégnation préalable de la colonne; dans le second cas, ils réagissent avec la colonne déjà imprégnée par l'échantillon (et éventuellement, par d'autres réactifs).

Ce n'est qu'au cours de la dernière étape que le produit de traversée est recueilli pour analyse; les produits de traversée de toutes les autres étapes sont rejetés. Eventuellement si les cartouches sont réutilisables, le dernier produit peut être un produit de rinçage ou de reconditionnement.

L'un des inconvénients d'un tel procédé réside dans la durée nécessaire pour que l'échantillon et les réactifs traversent la colonne qu'ils doivent imprégner.

Pour accélérer cette traversée, on emploie généralement des plaques à vide reliées de manière étanche à l'orifice en partie inférieure de chacune des cartouches. La dépression ainsi créée procure un accroissement de la vitesse de traversée et donc une réduction du temps total nécessaire pour la préparation de l'échantillon analysé.

Ces plaques à vide sont cependant des dispositifs encombrants qui doivent être adaptés aux dimensions des cartouches utilisées et nécessitent l'utilisation d'une pompe à vide.

L'invention propose un procédé permettant de réduire le temps total de préparation des échantillons à analyser, qui évite le recours à une plaque à vide; le matériel est ainsi simplifié, ne nécessite pas de source d'énergie additionnelle (à la différence des pompes à vide), et il est aisément adaptable aux appareils préparateurs d'échantillons déjà existants.

A cet effet, selon l'invention, les réactifs et l'échantillon de départ sont injectés successivement à l'intérieur de la cartouche préalablement obturée de manière étanche en partie supérieure par l'intermédiaire de moyens, de manière que l'injection du réactif ou de l'échantillon crée, au sommet de la cartouche, une surpression propre à accélérer la traversée de la colonne par le réactif ou l'échantillon.

De préférence, immédiatement après injection du réactif ou de l'échantillon, on procède à une injection supplémentaire d'air, de manière à accroître la surpression préalablement créée.

L'invention propose également un appareil pour la mise en œuvre du procédé.

Cet appareil est d'un type classique, connu sous le nom de «préparateur automatique d'échantillons» ou «passeur automatique d'échantillons», c'est-à-dire du type comprenant:

– des premiers moyens supports d'au moins un récipient de réactif, d'une pluralité d'échantillons de départ et d'une pluralité de cartouches,

– une aiguille de prélèvement et d'injection, mobile au-dessus des premiers moyens supports, permettant l'aspiration de quantités prédéterminées d'un réactif donné ou d'un échantillon de départ donné et le refoulement de la quantité aspirée dans une cartouche prédéterminée.

Selon l'invention, il est prévu en outre:

– des moyens assurant une coopération étanche entre chaque colonne et l'aiguille, assurant la fermeture étanche de la cartouche en partie supérieure après pénétration de l'aiguille,

– au-dessous des premiers moyens supports, des seconds moyens supports pour des tubes ou alvioles disposés sous les orifices en partie inférieure des cartouches, ces tubes ou alvéoles étant propres à recueillir pour analyse ultérieure les derniers produits respectifs de traversée de la colonne.

Avantageusement, les seconds moyens supports sont des moyens mobiles sélectivement en fonction du déroulement des étapes du procédé, d'une première position à une seconde position de sorte que:

– dans la première position, un récipient collecteur porté par les seconds moyens supports, soit placé sous les cartouches pour recueillir les produits de la traversée au cours d'au moins une étape préalable du procédé,

– dans la seconde position, les tubes soient placés sous les cartouches respectives pour recueillir les produits de la traversée au cours d'une étape finale du procédé.

Avantageusement, il est prévu un doigt de manœuvre solidaire des seconds moyens supports, doigt contre lequel l'aiguille mobile est susceptible de venir en contact de manière à entraîner ces seconds moyens supports et réaliser le passage d'une desdites positions à l'autre position.

Le changement de position est ainsi simplement réalisé par une manœuvre supplémentaire de l'aiguille, sans qu'il soit nécessaire de prévoir des moyens spécifiques d'entraînement des seconds moyens supports. Mais un autre moyen (moteur indépendant, ou tout autre moyen), peut être envisagé.

D'autres caractéristiques et avantages de l'invention apparaîtront à la lecture de la description ci-dessous, faite en référence aux dessins annexés, sur lesquels:

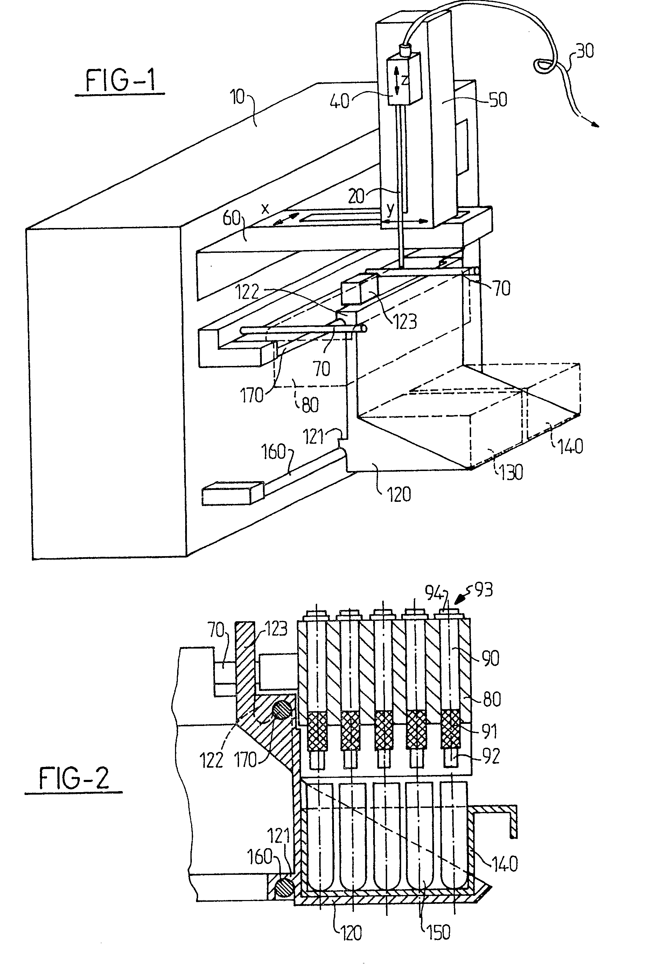

– la figure 1 est une vue perspective d'un appareil selon l'invention,

– la figure 2 est une vue en coupe transversale de ce même appareil, selon la ligne II–II de la figure 6,

– les figures 3 et 4 sont des vues de face de l'appareil, en coupe selon la ligne IV–IV de la figure 6, respectivement au cours des étapes préalables et au cours de l'étape finale du procédé,

– la figure 5 correspond au détail repéré V de la figure 3, et illustre la structure des cartouches en partie supérieure,

– la figure 6 est une vue de dessus de l'appareil.

– les figures 7 et 8 sont des vues homologues des figures 3 et 6, pour une variante de réalisation de l'appareil permettant aux seconds moyens support d'occuper une troisième position pour le prélèvement des échantillons aux fins d'analyse.

Sur les figures, la référence 10 désigne un préparateur automatique d'échantillons de type connu, par exemple le modèle GILSON «221» ou GILSON «222». Cet appareil comporte une aiguille d'injection 20 reliée par un conduit 30 à un dispositif d'aspiration tel qu'un diluteur GILSON «401».

L'aiguille 20 est mobile selon trois directions X, Y et Z au moyen de bras mobiles 40, 50, 60. Le déplacement en X–Y permet de déplacer l'aiguille au-dessus d'une série de tubes ou de récipients pouvant être sélectionnés automatiquement; le déplacement en Z permet l'introduction de l'aiguille dans le tube ou le récipient sélectionné pour y aspirer ou injecter le produit, l'aiguille étant ensuite relevée pour être déplacée vers une autre position.

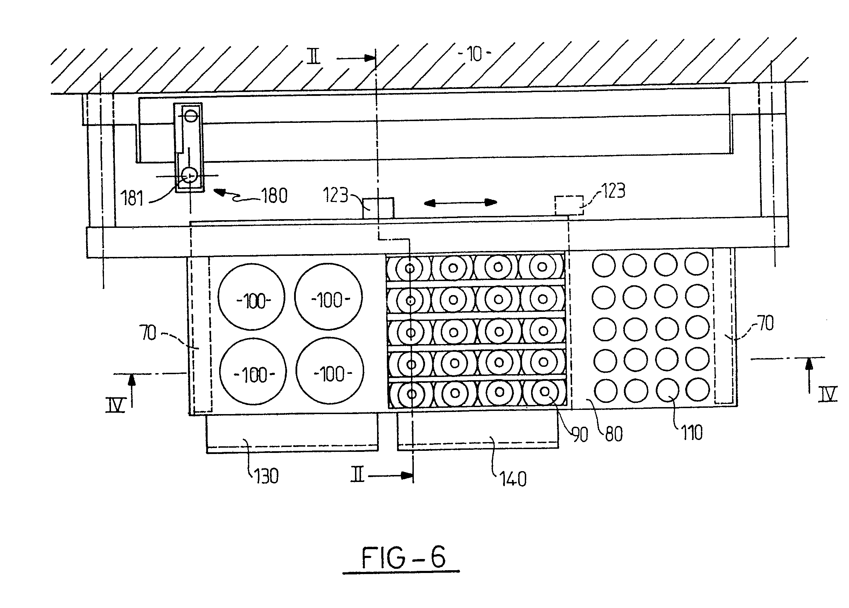

Les différents tubes ou réactifs (visibles en plan figure 6) sont supportés par des barres horizontales 70 recevant un support 80 pourvu de logements pour les différents tubes ou réactifs.

Dans le cas du procédé de l'invention, le support 80 loge des cartouches 90, des récipients de réactifs 100, et des tubes d'échantillons de départ 110, en nombre égal à celui des cartouches.

Plus précisément, les cartouches 90 – qui sont d'un type connu en soi – contiennent une colonne 91 d'un agent pulvérulent (un silicate par exemple) qui sera imprégné par les réactifs et l'échantillon successivement injectés au cours des étapes du procédé. Le surplus de produit injecté (c'est-à-dire la partie du produit injecté qui n'aura pas réagi avec le produit pulvérulent) s'écoule par un orifice 92 en partie inférieure.

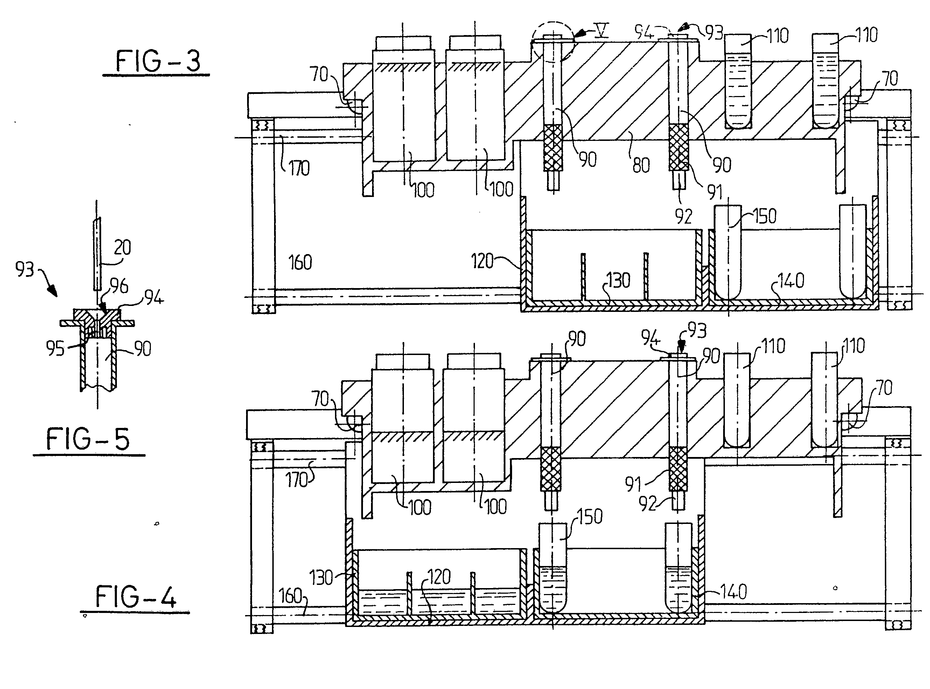

Selon l'invention, on prévoit (figure 5) de fermer les tubes en partie supérieure 93 par un bouchon obturateur 94 portant un orifice axial 95 recevant l'aiguille d'injection 20 lorsque celle-ci est abaissée au centre de la colonne pour injection d'un réactif ou d'un échantillon (l'évasement conique 96 facilite le guidage de l'aiguille lors de la descente de celle-ci).

Les dimensions de l'orifice axial 95 et l'élasticité de l'obturateur 94 sont choisies de manière que, lorsque l'aiguille a entièrement pénétré le bouchon, la fermeture étanche de la cartouche est réalisée en partie supérieure.

En variante, au lieu de pourvoir chaque cartouche d'un bouchon individuel, on pourrait envisager de munir la partie inférieure de l'aiguille d'un bouchon unique, qui resterait solidaire de celle-ci. L'étanchéité serait alors obtenue au moment de la descente de l'aiguille, par application du bouchon contre la face supérieure de la cartouche.

Selon l'invention également, le préparateur automatique d'échantillons est pourvu, en partie inférieure, d'un chariot 120 posé sous le support 80.

Ce chariot reçoit deux bacs 130, 140: l'un 130 sert simplement, lorsqu'il est placé sous les colonnes, à collecter les produits de traversée des colonnes qui ne seront pas conservés; l'autre 140 sert de support à une série de tubes individuels 150, en nombre égal à celui des cartouches 90 et des échantillons de départ 110, pour recueillir, au cours de la dernière étape du procédé, les produits de traversée de chacune des cartouches.

Ce chariot est mobile pour permettre de placer alternativement l'un ou l'autre des bacs 130, 140 sous les cartouches 90. A cet effet, le préparateur automatique 10 comporte en outre deux glissières horizontales longitudinales 160, 170 recevant des gorges 121, 122 du chariot 120, de forme homologue. De la sorte, ce dernier peut coulisser librement, selon un degré de liberté en translation longitudinale, sur les glissières 160, 170.

Pour entraîner le chariot dans son mouvement de translation, il est prévu un doigt de manœuvre 123 formant un prolongement vers le haut du chariot 120, et déporté en direction du boîtier du préparateur d'échantillons 10.

Ce doigt de manœuvre est situé à l'intérieur de la zone de déplacement possible en X–Y de l'aiguille 20. De la sorte, pour déplacer le chariot, il suffit de déplacer (automatiquement, sous commande du préparateur d'échantillons) l'aiguille jusqu'à ce qu'elle vienne en contact avec les faces latérales du doigt de manœuvre, par exemple la face gauche pour déplacer le chariot mobile vers la droite, ou inversement. L'aiguille est alors déplacée longitudinalement (toujours de façon automatique) selon la direction X, réalisant ainsi l'entraînement et le déplacement du chariot mobile.

On va maintenant décrire le fonctionnement de l'appareil, en même temps que le déroulement des différentes étapes du procédé de l'invention.

A titre purement illustratif, on prendra un exemple de procédé comprenant les étapes suivantes:
– imprégnation de la colonne par un réactif A,
– addition d'un réactif B,
– addition d'un échantillon individuel,
– addition d'un réaction C,
– addition d'un réactif D.

Au cours des quatre premières étapes, les produits de traversée ne sont pas conservés, ils sont simplement recueillis pour être entièrement jetés; par contre, lors de la dernière étape, on recueille le produit de traversée, qui constituera l'échantillon final, prêt à être analysé.

On supposera qu'entre chacune des différentes étapes, l'aiguille est soumise à un rinçage pour éviter toute contamination; l'opération peut par exemple être réalisée, de manière connue, par un poste de rinçage 180 (figure 6) pourvu d'un orifice 181 où l'aiguille est soumise au rinçage.

La position initiale du chariot mobile est celle représentée figure 3, c'est-à-dire avec le bac collecteur 130 placé sous les cartouches 90.

On déplace alors l'aiguille au-dessus du récipient 100 contenant le réactif A, on en aspire une quantité prédéterminée; on place l'aiguille au-dessus de la première cartouche, on abaisse l'aiguille et on procède à l'injection du réactif A dans la cartouche.

Lors de cette injection, et du fait de la fermeture étanche de la cartouche en partie supérieure, il va se créer au sommet de celle-ci une surpression du volume d'air résiduel, consécutive à l'injection du liquide.

La surpression ainsi créée aide à chasser le liquide à travers la colonne 91 vers l'orifice de décharge 92.

Avantageusement, après injection du liquide, sans retirer l'aiguille, on procède à une injection supplémentaire d'air pour accroître encore la surpression du volume résiduel en partie supérieure de la cartouche.

Le surplus de réactif s'écoule par l'orifice 92 et est collecté dans le bac 130.

Après rinçage de l'aiguille, on procède de la même façon pour l'injection d'un réactif B, puis de l'échantillon individuel prélevé dans l'un des tubes 110, puis du réactif C.

Les étapes préalables de préparation de la cartouche étant terminées, on déplace le chariot mobile 120 vers la gauche, de façon qu'il occupe la position représentée figure 4, dans laquelle, en dessous de chacune des colonnes, se trouve un tube individuel 150 destiné à recueillir l'échantillon final à analyser.

Ce déplacement du chariot est réalisé, comme indiqué plus haut, par un mouvement supplémentaire de l'aiguille de manière que celle-ci vienne en contact avec le doigt d'entraînement 123 permettant l'entraînement du chariot.

On peut alors procéder à l'aspiration du réactif D et à son injection dans la cartouche; de la même façon que précédemment, il est possible d'accélérer encore la traversée de la colonne par une addition supplémentaire d'air dans le volume supérieur de la cartouche.

L'échantillon final est alors obtenu dans le tube 150. On peut alors recommencer le cycle et passer à la préparation de l'échantillon suivant, après repositionnement du chariot mobile à la position initiale (figure 3).

Pour réduire le temps total de préparation de la série d'échantillons, il est possible d'injecter un même réactif dans plusieurs colonnes au cours d'une même étape. Cette injection multiple (dans cinq ou dix cartouches) est alors suivie d'une injection multiple d'air servant à chasser le liquide au travers de la colonne.

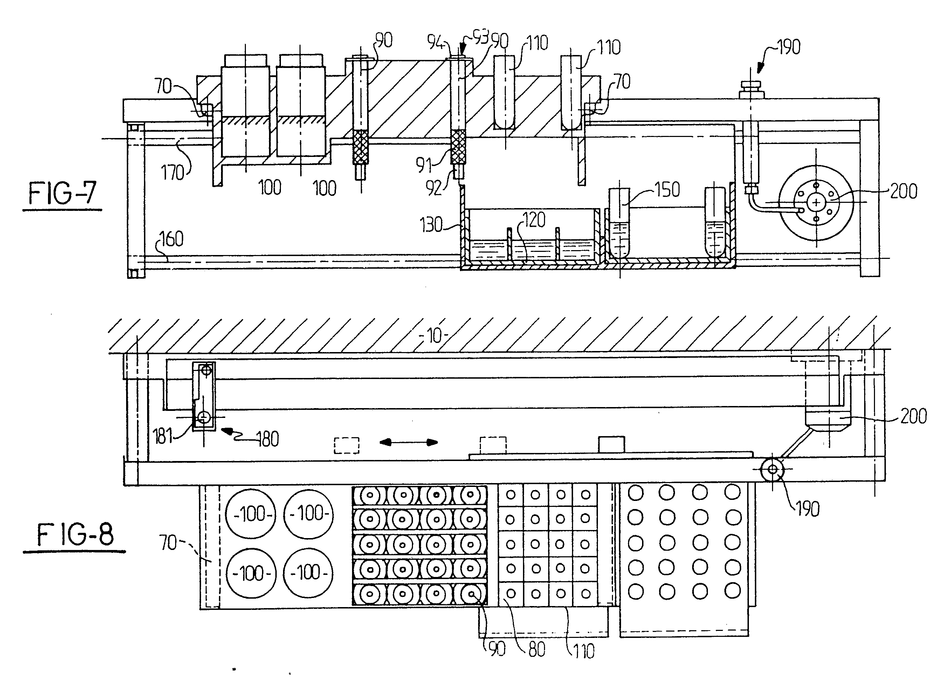

Dans la variante illustrée figures 7 et 8, le chariot mobile 130 peut occuper une troisième position, extrême, dans laquelle les échantillons finals recueillis dans les tubes 150 vont pouvoir être prélevés par l'aiguille puis injectés dans un orifice d'injection 190 pour être dirigés vers une vanne 200 d'injection de chromatographe (par exemple chromatographie haute pression en phase liquide), ou tout autre système d'analyse.

## Revendications

1. Un procédé de préparation d'échantillons à des fins d'analyse, dans lequel au moins un réactif et un échantillon de départ sont successivement injectés au moyen d'une aiguille (20) dans une cartouche (90) pourvue d'un orifice (92) en partie inférieure, de manière à traverser une colonne (91) d'un agent pulvérulent contenu dans la cartouche, et dans lequel on recueille pour analyse le dernier produit de traversée de la colonne, caractérisé en ce que les réactifs et l'échantillon de départ sont injectés successivement à l'intérieur de la cartouche préalablement obturée de manière étanche en partie supérieure par l'intermédiaire de moyens (94), de manière que l'injection du réactif ou de l'échantillon crée, au sommet de la cartouche, une surpression propre à accélérer la traversée de la colonne par le réactif ou l'échantillon.

2. Un procédé selon la revendication 1, caractérisé en ce que, immédiatement après injection du réactif ou de l'échantillon, on procède à une injection supplémentaire d'air, de manière à accroître la surpression préalablement créée.

3. Un appareil pour la mise en œuvre du procédé selon la revendication 1, du type comprenant:

– des premiers moyens supports (80) d'au moins un récipient (100) de réactif, d'une pluralité d'échantillons de départ (110) et d'une pluralité de cartouches (90),

– une aiguille (20) de prélèvement et d'injection, mobile au-dessus des premiers moyens supports, permettant d'aspiration de quantités prédéterminées d'un réactif donné ou d'un échantillon de départ donné et le refoulement de la quantité aspirée dans une cartouche prédéterminée, caractérisé en ce qu'il est prévu:

– des moyens (94) assurant une coopération étanche entre chaque colonne et l'aiguille, assurant la fermeture étanche de la cartouche en partie supérieure après pénétration de l'aiguille,

– au-dessous des premiers moyens supports, des seconds moyens supports (120, 140) pour des tubes (150) ou alvéoles disposés sous les orifices en partie inférieure des cartouches, ces tubes ou alvéoles étant propres à recueillir pour analyse ultérieure les derniers produits respectifs de traversée de la colonne.

4. Un appareil selon la revendication 3, caractérisé en ce que les seconds moyens supports sont des moyens mobiles, sélectivement en fonction du déroulement des étapes du procédé, d'une première position à une seconde position de sorte que:

– dans la première position, un récipient collecteur (130) porté par les seconds moyens supports, soit placé sous les cartouches pour recueillir les produits de la traversée au cours d'au moins une étape préalable du procédé,

– dans la seconde position, les tubes soient placés sous les cartouches respectives pour recueillir les produits de la traversée au cours d'une étape finale du procédé.

5. Un appareil selon la revendication 4, caractérisé en ce qu'il est prévu un doigt de manœuvre (123) solidaire des seconds moyens supports, doigt contre lequel l'aiguille mobile est susceptible de venir en contact de manière à entraîner ces seconds moyens supports et réaliser le passage d'une desdites positions à l'autre position.

6. Un appareil selon la revendication 4, caractérisé en ce que les seconds moyens support sont également mobiles vers une troisième position, dans laquelle les produits de la traversée contenus par les tubes seront prélevés par l'aiguille pour être injectés vers un dispositif d'analyse (190, 200).

## Patentansprüche

1. Verfahren zum Vorbereiten von Proben zum Zwecke der Analyse, bei dem mindestens ein Reagenz und eine Startprobe nacheinander mittels einer Nadel (20) in eine Kartusche (90) injiziert werden, welche im unteren Bereich eine Öffnung (92) aufweist, wobei die Startprobe und das Reagenz eine Kolonne (91) mit einem pulverförmigen Mittel in der Kartusche passieren, und bei dem das Endprodukt nach dem Passieren der Kolonne für die Analyse konzentriert wird, dadurch gekennzeichnet, dass die Reagenzien und die Startprobe nacheinander in das Innere der vorher mit Hilfe von Verschlussmitteln (94) im oberen Bereich dicht verschlossene Kartusche injiziert werden, wobei das Injizieren des Reagenzes oder der Probe im obersten Teil der Kartusche einen Überdruck zum Beschleunigen des Transports des Reagenzes oder der Probe durch die Kolonne erzeugt.

2. Verfahren nach Anspruch 1, dadurch gekennzeichnet, dass unmittelbar vor dem Injizieren des Reagenzes oder der Probe zusätzlich Luft injiziert wird, um den vorher erzeugten Überdruck zu steigern.

3. Vorrichtung zum Ausführen des Verfahrens nach Anspruch 1, mit
- ersten Haltemitteln (80) für mindestens einen Reagenz-Rezipienten (100), für mehrere Startproben (110) und für mehrere Kartuschen (90),
- einer oberhalb der ersten Haltemittel bewegbaren Nadel (20) zum Entnehmen und Injizieren, die eine vorbestimmte Menge eines gegebenen Reagenzes oder einer gegebenen Startprobe ansaugen und die angesaugte Menge in eine vorbestimmte Kartusche abgeben kann, gekennzeichnet durch
- Verschlussmittel (94), welche eine Abdichtung zwischen der jeweiligen Kolonne und der Nadel und vor dem Eindringen der Nadel den dichten Verschluss der Kartusche im oberen Bereich sicherstellen, und
- zweite Haltemittel (120, 140) unterhalb der ersten Haltemittel für unterhalb der Öffnungen in den unteren Bereichen der Kartuschen angeordnete Röhrchen (150) oder Kammern zum Aufnehmen der Endprodukte, welche die Kolonne passiert haben, für die spätere Analyse.

4. Vorrichtung nach Anspruch 3, dadurch gekennzeichnet, dass die zweiten Haltemittel wählbar in Abhängigkeit von der Reihenfolge der Ver-

fahrensschritte von einer ersten in eine zweite Position bewegbar sind, wobei
- in der ersten Position ein von den zweiten Haltemitteln gehaltener Sammelrezipient (130) unterhalb der Kartuschen positioniert ist, um diejenigen Produkte aufzunehmen, welche während mindestens einer vorangegangenen Etappe des Verfahrens die Kolonne passiert haben,
- in der zweiten Position die Röhrchen unterhalb den entsprechenden Kartuschen positioniert sind, um diejenigen Produkte des Durchlaufes, welche während einer abschliessenden Etappe des Verfahrens die Kolonne passiert haben, aufzunehmen.

5. Vorrichtung nach Anspruch 4, gekennzeichnet durch einen mit den zweiten Haltemitteln festen Mitnehmer (123) mit dem die bewegliche Nadel in Kontakt gebracht werden kann, um die zweiten Haltemittel mitzunehmen und die Verschiebung von einer in die andere Position vorzunehmen.

6. Vorrichtung nach Anspruch 4, dadurch gekennzeichnet, dass die zweiten Haltemittel ferner in eine dritte Position bewegbar sind, in welcher die in den Röhrchen enthaltenen Produkte, welche die Kolonne passiert haben, mittels der Nadel zum Injizieren in ein Analysegerät (190, 200) entnehmbar sind.

## Claims

1. A process for preparing samples for analysis, in which at least one reagent and an initial sample are successively injected by means of a needle (20) into a cartridge (90) which is provided with an orifice (92) in its lower part, in such a way as to pass through a column (91) of a powdery agent contained in the cartridge, and in which the final product of the pass through the column is recovered for analysis, characterised in that the reagents and the initial sample are injected successively into the interior of the cartridge after the cartridge has been sealingly closed at the top through of means (94), in such a way that the injection of the reagent or of the sample causes an overpressure at the top of the cartridge such as to accelerate the passage of the reagent or sample through the column.

2. A process according to Claim 1, characterised in that, immediately after the injection of the reagent or sample, a supplementary injection of air is performed in such a way as to increase further the pressure previously increased.

3. Apparatus for performing the process according to Claim 1, the apparatus being of the type comprising:
- first support means (80) for supporting at least one reagent receptacle, a plurality of initial samples (110) and a plurality of cartridges (90),
- and a sampling and injection needle (20) which is movable over the first support means for the purpose of sucking up predetermined quantities of a given reagent or of a given initial sample, and for dispensing the quantities so collected into a predetermined cartridge, characterised in that there are further provided:

– means (94) for providing sealing cooperation between each column and the needle, whereby the cartridge is sealingly closed at the top after penetration of the needle, and

– second support means (120, 140) located below the first support means, for holding tubes (150), or alveolus, disposed below the said orifices in the lower part of the cartridges, these tubes or alveolus being arranged to collect for subsequent analysis the respective products of the final passes of the column.

4. Apparatus according to Claim 3, characterised in that the second support means are means which are movable selectively according to the steps of the process progress, from a first position to a second position, in such a way that:

– in the first position, a collecting receptacle (130), carried by the second support means, is placed below the cartridges so as to collect the products of the pass during at least one early step in the process, and

– in the second position, the tubes are placed below the respective cartridges so as to collect the products of the pass during a final step of the process.

5. Apparatus according to Claim 4, characterised in that manoeuvring finger (123), which is fixed to the second support means, is provided, the movable needle being arranged to come into contact with the said finger in such a way as to drive these second support means and to cause them to move from one of the said positions to the other position.

6. Apparatus according to Claim 4, characterised in that the second support means are also movable towards a third position, in which the products of the passes contained in the tubes will be drawn up by the needle so as to be injected into an analysing means (190, 200).

FIG-1

FIG-2

FIG-3

FIG-5

FIG-4

FIG-6

FIG-7

FIG-8

EP 0 180 511 B1

13